# EUROPEAN PATENT SPECIFICATION

(11) **EP 1 212 935 B1**
(45) Date of publication and mention of the grant of the patent: **16.11.2005**
(21) Application number: 01128736.4
(22) Date of filing: 03.12.2001
(51) Int. Cl.: A01G 3/053

(54) **Hedge trimmer**
Heckenschere
Taille-haie

(30) Priority: 06.12.2000 JP 2000371981
(43) Date of publication of application: 12.06.2002
(73) Proprietor: Makita Corporation, Anjo-shi, Aichi-ken (JP)
(72) Inventor: Umemura, Shingo, Anjo, Aichi-ken (JP); Nakadachi, Hideyuki, Anjo, Aichi-ken (JP)
(74) Representative: Kramer - Barske - Schmidtchen

(56) References cited:
- DE-A- 19 827 107
- GB-A- 2 291 744
- PATENT ABSTRACTS OF JAPAN vol. 2000, no. 01, 31 January 2000 (2000-01-31) & JP 11 275961 A (MATSUSHITA ELECTRIC WORKS LTD), 12 October 1999 (1999-10-12)

## Description

The present invention relates to hedge trimmers that can be used, e.g., for trimming trees and hedges.

Hedge trimmers are known that have a body including a front handle and a rear handle. Two elongated cutting blades extend from the front portion of the body. When an operator grasps both handles and turns ON switches disposed on the respective handles, the cutting blades alternatively reciprocate along the longitudinal direction or axis of the hedge trimmer. Each of the cutting blades has a series of cutting edges formed on one side of each cutting blade. The cutting edges protrude laterally from the respective cutting blades and are spaced from each other at predetermined intervals along the longitudinal direction or axis of the respective cutting blades. Therefore, tree branches are inserted between the cutting edges of two cutting blades and are cut due to the alternatively reciprocating movement of the respective cutting blades.

In order to prevent the cutting blades from being accidentally driven, the cutting blades are only driven or reciprocated if the operator turns ON both switches of the respective handles while grasping the handles with both hands.

If the operator wishes to cut branches that are remotely positioned from the operator, it would be convenient and advantageous for the operator to grasp the rear portion of the body of the hedge trimmer with both hands in order to perform a cutting operation in a comfortable posture. For example, German Laid-open Patent Publication No. 44 21 746 A1 teaches an auxiliary handle that extends from a rear handle disposed on the rear portion of hedge trimmer body. As a result, the hedge trimmer can be driven if the operator turns ON both the rear handle switch and the auxiliary handle switch while grasping both handles.

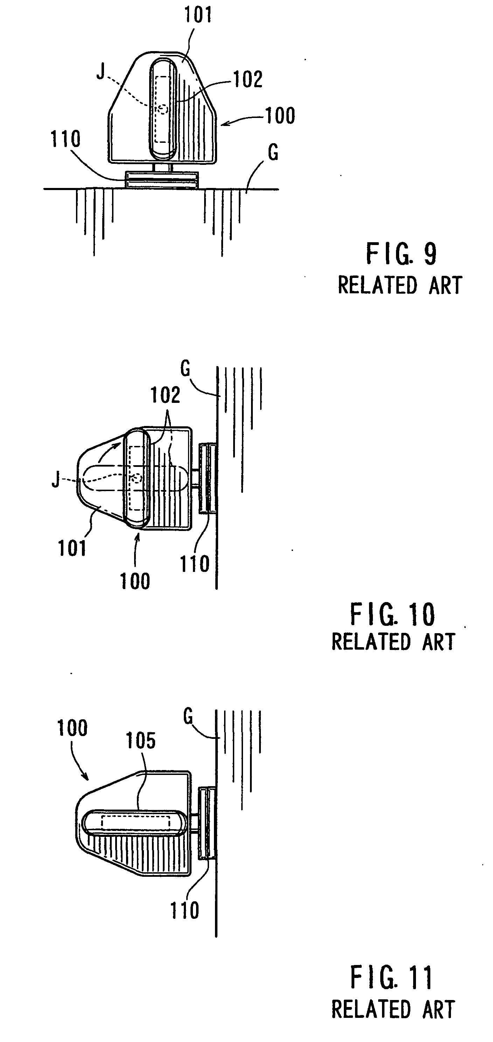

Further, as schematically shown in FIG. 11, in order to trim a side surface of a hedge G using a known hedge trimmer 100, the operator inclines or rotates the entire hedge trimmer 100 by an angle of 90º, so that the cutting blades 110 extend within a vertical plane. In order to place the hedge trimmer 100 in this vertically oriented position, the operator typically will bend at the waist. If the operator is required to horizontally bend in this position for an extended period of time, the operator may become uncomfortable or fatigued and the trimming operation may become difficult to perform. In order to address this problem, German Laid-open Patent Publication No. 195 32 299 A1 teaches a hedge trimmer 100 that is schematically shown in FIGS. 9 and 10, in which a main handle 102 is mounted on the rear portion of a tool body 101 of a hedge trimmer. The main handle 102 can rotate about a main axis or a rotational axis J of the body 101. The rotational axis J extends in parallel with the longitudinal direction or axis of the cutting blades 110. Thus, the hedge trimmer 100 can be held with the cutting blades 110 extended within a vertical plane, and the operator can stand in an upright posture without bending or inclining at the waist.

However, the hedge trimmer 100 of German Laid-open Patent Publication No. 195 32 299 A1 requires the operator to rotate the main handle relative to the body of the hedge trimmer each time that the cutting position of the cutting blades is changed, e.g., between a vertically oriented position and horizontally oriented position. Thus, this hedge trimmer can be cumbersome and inconvenient to operate.

JP 11-275 961 A discloses a hedge trimmer according to the preamble of claim 1.

It is, accordingly, one object of the present invention to teach an improved hedge trimmer.

This object is achieved by the invention of claim 1.

In one embodiment, hedge trimmers may include a pair of cutting blades. Each of the cutting blades may have a longitudinal axis and may extend forwardly from a lower, front portion of the body. The motor may drive the cutting blades, so that the cutting blades alternatively reciprocate along the longitudinal axis.

The hedge trimmers comprise a main handle and at least two auxiliary handles. The main handle extends from the upper, rear portion of the body. The auxiliary handles extend rearward from the lower, rear portion of the body and are disposed on right and left sides of the body, respectively. Therefore, an operator can easily perform a cutting operation, such as a trimming or pruning operation of tree branches that are above the operator or at a position away from the operator, while holding any two of these handles. For example, the operator may hold the main handle and one of the two auxiliary handles.

Further, in order to perform a cutting operation with the cutting blades extended in different directions, the operator is not required to assume an unnatural posture. For example, if the direction of the surface of the cutting blades will be changed from a horizontally oriented direction to a vertically oriented direction, the operator may rotate or incline the body of the hedge trimmer by an angle of 90º and may simply change the handles that are grasped or held. In this case, the operator can stand in an upright posture without bending or twisting his/her body. Preferably, the switch levers of the two auxiliary handles are adapted to be operated by the operator in order to start a motor. If a switch lever is disposed on each of the three handles, the operator can easily start the motor and cut tree branches above the operator or at a position away from the operator, while the operator grasps the main handle and one of the auxiliary handles.

In another embodiment, a front switch lever associated with a front handle also may be provided. In this case, the motor may be started when at least two switches selected from the front switch lever and the other switch levers have been operated or actuated.

Two of the other switch levers may be connected or coupled to each other, so that these switch levers may move together to start the motor. In another representative embodiment, these two switch levers are associated with the respective auxiliary handles, and are connected or coupled to each other to form a loop.

In another embodiment, the two auxiliary handles may be connected or coupled to each other in order to increase the rigidity of the auxiliary handles. More preferably, the auxilliary handles may be connected or coupled to form a loop, which will provide an attractive appearance and increase the commercial value of the power shears.
In another embodiment, an actuation member may be mechanically coupled between an electrical switch and the front and rear switch levers. The electrical switch may be electrically connected to the motor, so that the motor can be started by the operation of the front and rear switch levers via the actuation member. The actuation member may be, e.g., a single rod that can move along its axial direction in order to turn ON the electric switch when any two of the front and rear switch levers are operated or actuated.
In another embodiment, a link arm may couple at least two of the rear switch levers to the actuation member. Preferably, the link arm can pivot relative to the body of the power shears in order to move the actuation member. Therefore, the movement of the rear switch levers may be reliably transmitted to the actuation member in order to turn ON the switch.
Additional objects, features and advantages of the present invention will be readily understood after reading the following detailed description together with the claims and the accompanying drawings, which will be briefly described as follows.
FIG. 1 is a perspective view of a representative hedge trimmer.
FIG. 2 is a side sectional view of the hedge trimmer.
FIG. 3 is an enlarged view of a part of FIG. 2 and shows a drive mechanism of the hedge trimmer and an actuation shaft.
FIG. 4 is a perspective view of a lifter plate.
FIG. 5 is a perspective view of an auxiliary handle assembly.
FIG. 6 is a schematic rear view of the hedge trimmer and shows an operation for trimming an upper surface of a hedge using cutting blades of the hedge trimmer, which cutting blades are positioned such that their respective blade surfaces extend horizontally.
FIG. 7 is a schematic rear view of the hedge trimmer and shows an operation for trimming a side surface of the hedge using the cutting blades of the hedge trimmer, which cutting blades are positioned such that their respective blade surfaces extend vertically.
FIG. 8 is a schematic rear view of the hedge trimmer and showing operation for trimming an opposite side surface of the hedge using by the cutting blades of the hedge trimmer, which cutting blades are positioned such that their respective blade surfaces extend vertically.
FIG. 9 is a schematic rear view of a known hedge trimmer having a rotatable handle and shows an operation for trimming an upper surface of a hedge using the cutting blades of the hedge trimmer, which cutting blades are positioned such that their respective blade surfaces extend horizontally.
FIG. 10 is a schematic rear view of the known hedge trimmer and shows the handle rotated by an angle of 90º in order to a side surface of the hedge using the cutting blades of the hedge trimmer, wherein the cutting blades are positioned such that their respective blade surfaces extend vertically.
FIG. 11 is a schematic rear view of another known hedge trimmer that has a handle fixed in position relative to a body, and shows an operation for trimming a side surface of the hedge using the cutting blades of the hedge trimmer, which cutting blades are positioned such that their respective blade surfaces extend vertically.

Each of the additional features and method steps disclosed above and below may be utilized separately or in conjunction with other features and method steps to provide improved hedge trimmers and methods for designing and using such hedge trimmers. Representative examples of the present invention, which examples utilize many of these additional features and method steps in conjunction, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detail description may not be necessary to practice the invention in the broadest sense, and are instead taught merely to particularly describe representative examples of the invention. Moreover, various features of the representative examples and dependent claims may be combined in ways that are not specifically enumerated in order to provide additional useful embodiments of the present teachings.

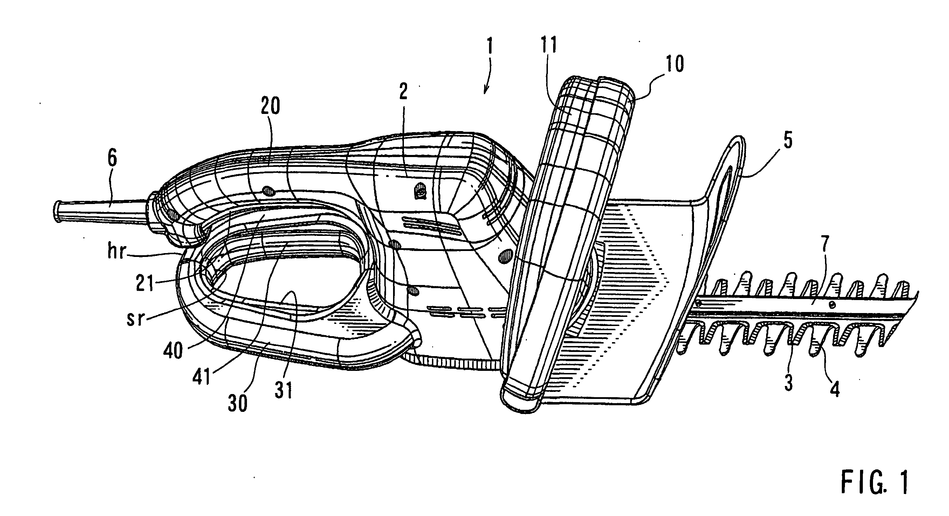

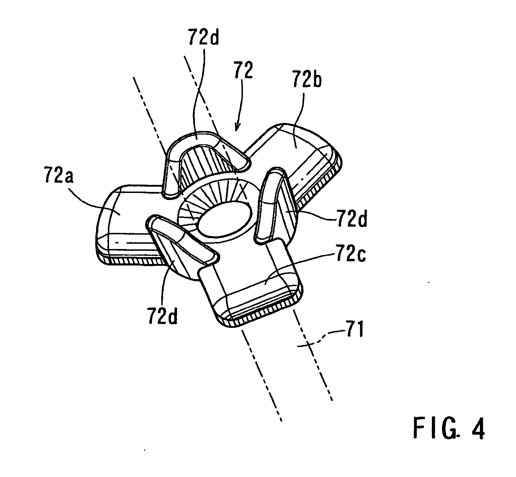

A representative embodiment of a hedge trimmer will now be described with reference to FIGS. 1 to 8.

FIG. 1 shows a representative hedge trimmer 1 that generally includes a body 2, a front handle 10, a pair of cutting blades 3, 4, a rear handle 20, and a pair of auxiliary handles 30, 40. The front handle 10 may be disposed on the front side (right side as viewed in FIG. 1) of the body 2. The cutting blades 3, 4 may extend forwardly from the lower, front portion of the body 2. The rear (main) handle 20 extends rearward (leftward as viewed in FIG. 1) from the upper, rear portion of the body 2. The auxiliary handles 30, 40 are respectively disposed on the left and right sides of the body 2. Further, the auxiliary handles 30, 40 extends rearward from the rear surface of the body 2. Switch levers 11, 21, 31 and 41 are associated with the front handle 10, the rear handle 20, and the auxiliary handles 30 and 40, respectively.

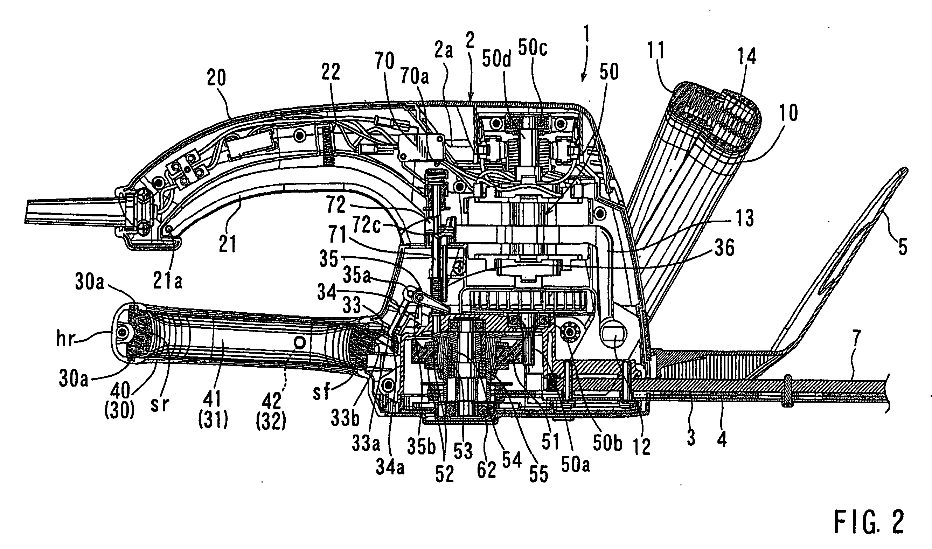

The front handle 10 may have a substantially inverted U-shaped configuration, when viewed from the front of the hedge trimmer 1, and may extend between the left and right side portions of the body 2. The switch lever 11 also may have a substantially inverted U-shaped configuration, when viewed from the front of the hedge trimmer 1, and may extend along the rear side of the front handle 10. As shown in FIG. 2, the switch lever 11 may be supported by the front portion of the body 10 via a support shaft 12, so that the switch lever 11 can pivot forward and rearward relative to the body 2 or the front handle 10. In the sectional side view of the hedge trimmer 1 shown in FIG. 2, the handle 10 is inclined forwardly relative to the vertical direction.

Preferably, a safety guard or a protection plate 5 may be attached to the body 2 and may extend forward of the front handle 10. The safety guard 5 may prevent cutting chips from scattering and contacting the operator's hands when the front handle 10 is grasped or held during the cutting or trimming operation.

Referring to FIGS. 1 and 2, an electric cord 6 may extend rearwardly from the rear portion of the main handle 20. The switch lever 21 may be disposed on the lower side of the main handle 20 and may be pivotally mounted on the rear end of the main handle 20 via a pin 21a. The auxiliary handles 30, 40 extend below the main handle 20. The respective rear ends of the auxiliary handles 30, 40 may be curved toward each other and connected or coupled to each together. In that case, the auxiliary handles 30, 40 will form a loop. The switch levers 31, 41 may extend along lateral sides of their respective auxiliary handles 30 and 40 and may oppose each other. In addition, the switch levers 31, 41 may pivot relative to their respective auxiliary handles 30, 40, which will be further explained below.

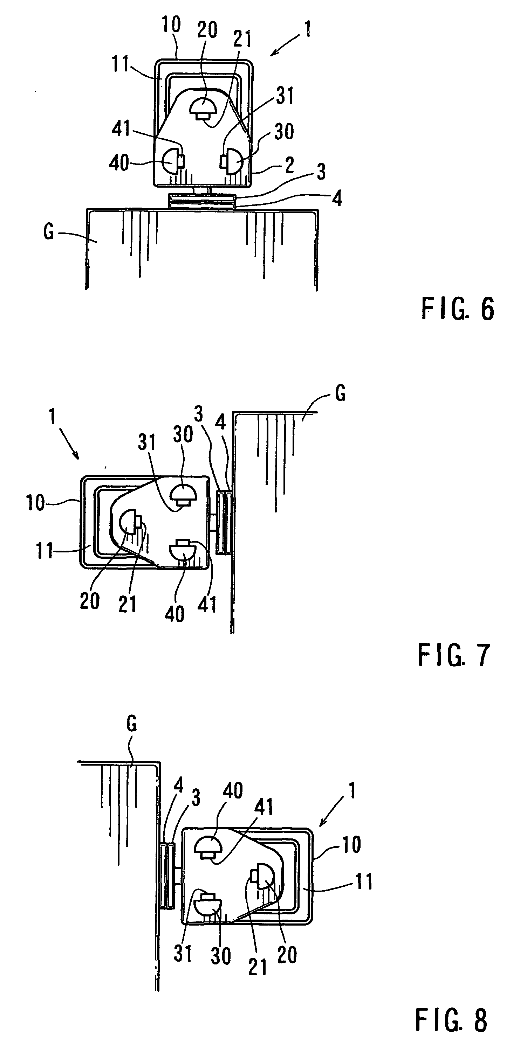

As schematically shown in FIG. 6, the main handle 20 is disposed on an upper side relative to the body 2, when viewed from the rear side of the hedge trimmer 1. Further, the auxiliary handles 30, 40 are disposed on a lower, right side and a lower, left side of the body 2, respectively.

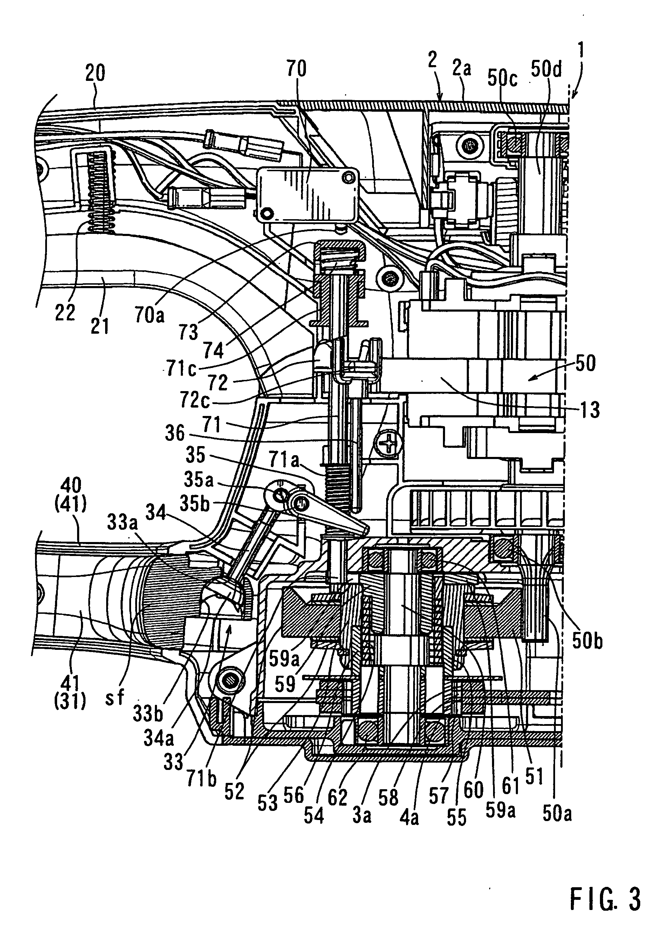

Representative mechanisms, which may be disposed within the body 2 in order to operate the cutting blades 3, 4, will now be described in further detail with reference to FIGS. 2 and 3. An electric motor 50 may be disposed substantially centrally within a hollow housing 2a of the body 2. A motor shaft 50d may be coupled to the motor 50 and may be rotatably supported by bearings 50b and 50c disposed within the housing 2a. The front end (lower end as viewed in FIGS. 2 and 3) of the motor shaft 50d may include a gear 50a that engages a drive gear 51. The drive gear 51 may be fitted onto an outer peripheral surface of an intermediate sleeve 53 and may rotate with the intermediate sleeve 53 by means of upper and lower Belleville springs 52. A Belleville spring is formed in the shape of a washer or a dished disk with an open center and is generally used to cushion a heavy load with relatively short motion.

The upper portion of the drive sleeve 56 may be co-axially inserted into the intermediate sleeve 53. The inner surfaces of the intermediate sleeve 53 and the drive sleeve 56 may have substantially the same diameter. A torsion coil spring 54 may preferably be made from a wire and may have a rectangular configuration in cross section. The upper and lower portions of the torsion coil spring 54 may be respectively positioned within the intermediate sleeve 53 and the torsion coil spring 54. The upper end of the torsion coil spring 54 may be attached to a limiter sleeve 59 that has been inserted into the intermediate sleeve 53 from the upper side. The lower end of the torsion coil spring 54 may be attached to the drive sleeve 56. Therefore, the intermediate sleeve 53 and the drive sleeve 56 may rotate together due to the frictional force that produced by the coil spring 54. Thus, the coil spring 54 may naturally expand to increase its diameter and may be pressed against both the intermediate sleeve 53 and the drive sleeve 56. The limiter sleeve 59 also may rotate together with sleeves 53, 56. The drive sleeve 56 (or the drive gear 51) and the limiter sleeve 59 may be secured to a drive shaft 60 that is rotatably supported by the body housing 2a via bearings 61 and 62.

As shown in FIG. 3, a pair of disks 57, 58 may be disposed below the drive sleeve 56 and the respective centers of each disk 57, 58 are preferably displaced from the rotational axis of the drive sleeve 56. Preferably, the centers of the disks 57, 58 may be disposed opposite to each other or may be displaced from each other by an angle of 180º about the rotational axis of the drive sleeve 56. Further, the disks 57, 58 may be respectively inserted into guide slots 3a, 4a that are formed within the rear ends of the cutting blades 3 and 4. Preferably, the guide slots 3a, 4a may be elongated in the transverse direction of the respective cutting blades 3a, 4a.

Referring to FIG. 2, a guide plate 7 may hold or support the cutting blades 3, 4 so that the cutting blades 3, 4 are substantially laid one on top of the other. In addition, the guide plate 7 may serve to guide the cutting blades 3, 4, such that the cutting blades 3, 4 can move or reciprocate along the longitudinal direction axis of the body 2 and the cutting blades 3, 4.

Therefore, when the motor 50 starts to rotate the gear 50a, the drive gear 51, the intermediate sleeve 53, the drive sleeve 56 and the limiter sleeve 59 will begin rotate in that order. While the drive sleeve 56 is rotating, the discs 57, 58 will rotate about the rotational axis of the drive shaft 60 and as a result, the cutting blades 3, 4 will reciprocate in opposite phases.

When a torque exceeding a predetermined value is applied against the movement of the cutting blades 3, 4, the drive gear 51 may rotate relative to the intermediate sleeve 53 against the biasing force of the Belleville spring 52. In that case, an excessive load may not be applied to the motor 50. Thus, the drive gear 51, the intermediate sleeve 53 and the Belleville spring 52 may constitute a torque limiting mechanism.

When switch 70 is actuated, the drive motor 50 will start. The switch 70 may be disposed within an upper portion of the body housing 2a and may be electrically connected to the motor 50. As will be further described below, the switch 70 may be turned ON when (1) the switch lever 11 of the front handle 10 and the switch lever 21 of the main handle 20 are simultaneously moved to their respective ON positions and/or (2) the switch lever 21 of the main handle 20 and one of either the switch lever 31 of the auxiliary handle 30 or the switch lever 41 of the auxiliary handle 40 are simultaneously moved to their respective ON positions.

Referring again to FIG. 2, the switch lever 11 of the front handle 10 may pivot about the support shaft 12 via compression spring 14 that is interposed between the upper portion of the switch lever 11 and the upper portion of the front handle 10. The compression spring 14 may preferably bias the switch lever 11 in a direction away from the front handle 10, which direction is the counterclockwise direction as viewed in FIGS. 2 and 3, or the direction toward OFF position. Therefore, the switch lever 11 may be moved to the ON position when the operator pivots the switch lever 11 toward the front handle 10 against the biasing force of the compression spring 14.

An operation arm 13 may have a front portion that is secured to the support shaft 12, so that the operation arm 13 may pivot together with the switch lever 11. A rear portion of the operation arm 13 may engage an actuation shaft 71 that is vertically and movably supported within the body housing 2a. Preferably, a compression spring 71a may bias the actuation shaft 71 in a downward direction, which downward direction is preferably a direction away from the switch 70.

Referring to FIGS. 2-4, a lifter plate 72 may be slidably fitted on the actuation shaft 71. For example, the lifter plate 72 may be loosely fitted on the actuation shaft 71, so that the lifter plate 72 can incline relative to the longitudinal axis of the actuation shaft 71. The lifter plate 72 may include three engaging tabs 72a, 72b and 72c that are preferably equally spaced from each other around the circumferential direction of the actuation shaft 71. Further, the engaging tabs 72a, 72b and 72c may preferably extend radially outward relative to the actuation shaft 71. An upward protrusion 72d may be disposed between each two adjacent engaging tabs 72a, 72b and 72c. The upward protrusions 72d may be adapted to contact a flange-like bottom portion of an abutting sleeve 71c that is secured to the upper end of the actuation shaft 71. Preferably, the rear portion of the actuation arm 13 may engage the engaging tab 72a of the lifter plate 72 from the lower side of the engaging tab 72a. In that case, the lifter plate 72 will be normally held or supported in a position away from the abutting sleeve 71, as shown in FIG. 3.

Therefore, when the switch lever 11 pivots toward the ON position, the actuation arm 13 may pivot in a clockwise direction as viewed in FIG. 2, so that the rear portion of the actuation arm 13 moves upward. Then, the engaging tab 72a of the lifter plate 72 may be lifted by the actuation arm 13, so that the lifter plate 72 may move upward and may incline with the engaging tab 72a positioned upward. As a result, the two upward protrusions 72d that are disposed adjacent to the engaging tab 72a may abut the lower flange surface of the abutting sleeve 71c. As a result, the actuation shaft 71 will move upward by a predetermined distance against the biasing force of the compression spring 71a. However, this predetermined distance is still not sufficient to turn on the switch 70.

Referring to FIG. 3, an actuation plate 73 may be mounted on the upper end of the actuation shaft 71 and may be biased by a compression coil spring 74. In addition, the switch 70 may include a push button 70a that opposes the upper surface of the actuation plate 73 in the vertical direction. A spring (not shown) may hold or support the push button 70a in position relative to the body of the switch 70. Preferably, the spring constant of the compression spring 74 is greater than the spring constant of the spring that biases the push button 70a. Therefore, as the actuation shaft 71 moves upward to press the upper surface of the actuation plate 73 against the button 70a, the vertical position of the actuation plate 73 preferably does not change relative to the actuation shaft 71. Instead, the push button 70a may move upward and into the body of the switch 70. When the push button 70a has reached a predetermined upper limit, the switch 70 may be turned on and the push button 70a is prevented from moving further upward. As the actuation shaft 71 moves further upward, the compression spring 74 may be compressed so as to permit such movement of the actuation shaft 71. Therefore, the push button 70a may be reliably moved to turn on the switch 70.

As described above, the distance of the upward movement of the actuation arm 13 caused by operating the switch lever 11 is still not sufficient to turn on the switch 70. In order to turn on the switch 70, the operator is require to also move at least one of the switch levers 21, 31, 41 to the respective ON position.

Referring to FIGS. 2 and 3, a compression spring 22 may be interposed between the main handle 20 and the switch lever 21. As noted above, the switch lever 21 can pivot about the pin 21a. Therefore, the switch lever 21 can move from the ON position to an OFF position when the operator operates or pushes the switch lever 21 against the biasing force of the spring 22. A front end (not shown) of the switch lever 21 may engage the engaging tab 72b from the lower side of the engaging tab 72b.

Therefore, when the operator grasps the main handle 20 and pivots the switch lever 21 from the OFF position to the ON position, the front end of the switch lever 21 moves upward. As a result, the engaging tab 72b of the lifter plate 72 also will move upward. Then, the lifter plate 72 may move upward and may incline with the engaging tab 72b positioned upward. Therefore, the two upward protrusions 72d that are adjacent to the engaging tab 72b may contact the lower flange surface of the abutting member 71c of the actuation shaft 71. Consequently, the actuation shaft 71 will move upward against the biasing force of the compression spring 71a.

When the operator also pivots the switch lever 11 of the front handle 10, the lift of the actuation shaft 71 provided by the switch lever 11 is added to the lift provided by the switch lever 21. Thus, the actuation shaft 71 can move upward by a distance that is sufficient to press the push button 70a of the switch 70 so as to turn on the switch 70. Further, when one of the switch levers 11 and 21 is moved to the ON position, only two upward protrusions 72d of the lifter plate 72, which protrusions are inclined relative to the actuation shaft 71, may contact the lower flange surface of the abutting member 71c. On the other hand, when both switch levers 11 and 21 are moved to their respective ON positions, all three upward protrusions 72d, which are substantially vertically oriented, may contact the lower flange surface of the abutting member 71c. Therefore, the actuation shaft 71 can be sufficiently lifted or raised to start the motor 50. In this representative embodiment, the switch 50 can not be turned ON if only one of the switch levers 11 and 21 is turned ON, because the lift provided by the actuation shaft 71 is not sufficient to turn ON the switch 70.

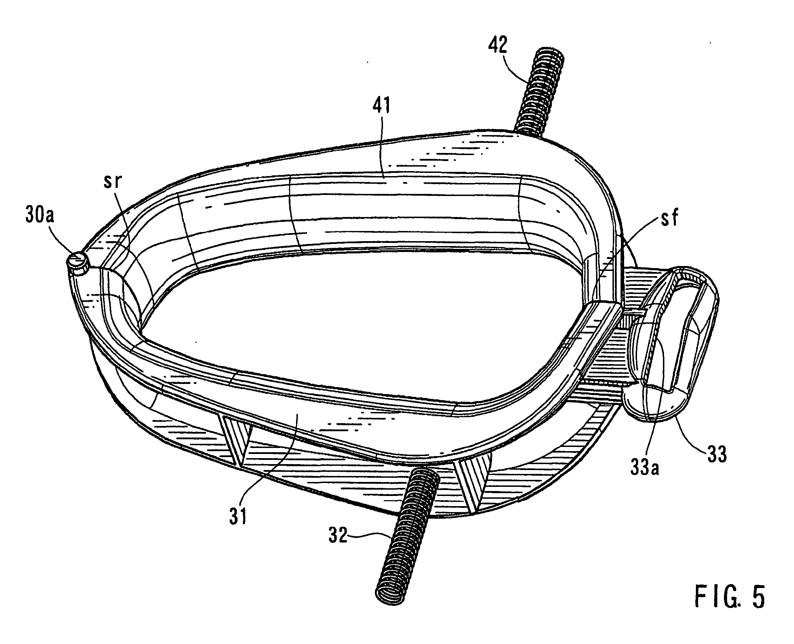

As described with respect to FIG. 1, the respective rear ends of the auxiliary handles 30, 40 may be connected to each other to form a loop. In addition, the rear ends of the switch levers 31, 41 may be connected to each other and the front ends of the switch levers 31, 41 also may be connected to each other. In this case, the switch levers 31 and 41 will form a loop, which loop may be disposed adjacent to the inner periphery of the loop of the auxiliary handles 30, 40. The loop formed by the switch levers 31 and 41 is shown in perspective view in FIG. 5.

As shown in FIGS. 2 and 5, support pins 30a may be disposed at a rear joint portion SR of the switch levers 31 and 41 and may respectively extend upward and downward from the joint portion SR. The support pins 30a may be pivotally connected to a joint portion HR on the rear side of the auxiliary handles 30 and 40. Therefore, the switch levers 31 and 41 can pivot substantially within the horizontal plane.

Compression spring 32 may be interposed between the auxiliary handle 30 and the switch lever 31 and compression spring 32 may be interposed between the auxiliary handle 40 and the switch lever 41. The compression springs 32, 42 may serve to bias the switch levers 31, 41 in directions away from the respective auxiliary handles 30 and 40 or may serve to hold the auxiliary handles 30 and 40 in their respective OFF positions.

A link arm engaging portion 33 may be disposed at a front joint portion SF of the switch levers 31, 41. The link arm engaging portion 33 may include a recess 33a formed between left and right side halves that are inclined in the left and right directions. As shown in FIGS. 2 and 3, an actuation rod 34 may be inserted through the recess 33a and may include a hemispherical engaging head 34a. The diameter of the hemispherical engaging head 34a preferably is greater than the width of the recess 33a. Further, the engaging head 34a may be slidably received within a hole 33b that communicates or is continuous with the recess 33a. An upper portion of the communication hole 33b may have a configuration that conforms to the hemispherical surface of the engaging head 34a. A pivot pin 35a may connect the upper end of the actuation shaft 34 to a rear end of a link arm 35. The link arm 35 may be vertically pivotally supported by the body housing 2a via a support pin 35b.

Therefore, when the operator pivots either one of the switch levers 31, 41 from the OFF position to the ON position against the biasing force of the compression spring 32 (or 42), the pivoted switch lever (31 or 41) will pivot horizontally about the support shafts 30a, so that the link arm engaging portion 33 may move toward the right or left side. Because the left and right side halves of the recess 33a of the link arm engaging portion 33 are inclined downward toward the respective left and right sides, the engaging head 34a will be forced to move downward as the link arm engaging portion 33 moves to the left or right side. Therefore, the actuation rod 34 may move downward, so that the pivot pin 35a may also move downward. As a result, the link arm 35 may pivot about the support pin 35b in a counterclockwise direction as viewed in FIGS. 2 and 3 and the front end of the link arm 35 will move upward.

A lifter pin 36 may be disposed above the front end of the link arm 35 and may be vertically and movably supported by the body housing 2a. The upper end of the lifter pin 36 may oppose the engaging tab 72c of the lifter plate 72. Therefore, the lifter pin 36 may move upward when the switch lever 31 or the switch lever 41 is pivoted from the OFF position to the ON position while the operator grasps either of the auxiliary handles 30, 40. Then, the engaging tab 72c of the lifter plate 72 may be moved upward by the lifter pin 36, so that the lifter plate 72 may incline relative to the actuation shaft 71 with the engaging tab 72c positioned upward. As a result, the two upward protrusions 72b disposed adjacent to the engaging tab 72c may contact the lower flange surface of the abutting sleeve 71c and the actuation shaft 71 may move upward against the biasing force of the compression spring 71a.

The lift of the actuation shaft 71, which is provided by moving the switch lever 41 to the ON position, is preferably the same as the lift that is provided by moving the switch lever 31 to the ON position. Further, the amount of lift provided by the switch lever 31 or 41 preferably is not sufficient to push the push button 70a in order to actuate the switch 70.

Thus, according to this representative embodiment, the actuation shaft 71 may move or displace push button 70a so as to turn ON the switch 70 when the lifts provided by any two of the following operations are summed or added:
(1) moving the switch lever 11 of the front handle 10 to the ON position,
(2) moving the switch lever 21 of the main handle 20 to the ON position, and
(3) moving the switch lever 31 (or 41) of the auxiliary handle 30 (or 40) to the ON position.

However, the lift provided by only one of the switch levers 11, 21, 31 and 41 is preferably not sufficient to turn ON the switch 70 or to start the motor 50.

When none of the switch levers 11, 21, 31 and 41 has been pivoted to the ON position, the compression spring 71a holds the actuation shaft 71 in a position that is the remotest or farthest position from the switch 70. In this position, a lower end 71b of the actuation shaft 71 may engage any of limiter tabs 59a formed on the upper end of the limiter sleeve 59. Preferably, the limiter tabs 59a may extend radially and outward from the limiter sleeve 59. Therefore, the limiter sleeve 59 may be prevented from rotating by disposing the actuation shaft 71 in the remotest position from the switch 70. As a result, the intermediate sleeve 53 and the drive sleeve 56 also may be prevented from rotating, so that the cutting blades 3, 4 can be locked. When any of the switch levers 11, 21, 31 and 41 has been pivoted to the ON position, the actuation shaft 71 will be lifted. Therefore the lower end 71b of the actuation shaft 71 may disengage from the corresponding limiting tab 59a. As a result, the limiter sleeve 59, the intermediate sleeve 53 and the drive sleeve 56 may be permitted to rotate in order to move the cutting blades 3, 4.

According to the hedge trimmer 1 of this representative embodiment, one main handle 20 and two auxiliary handles 30 and 40 may extend from the upper side, the lower left side and the lower right side of the rear portion of the body 2. Therefore, in order to trim an upper surface of a hedge G as shown in FIG. 6, the operator can position the cutting blades 3, 4 to extend in the horizontal direction. During this cutting operation, the operator can stand in an upright posture and hold the upper portion of the front handle 10 and the main handle 20 with both hands.

In order to trim a lateral side of the hedge G, the operator may incline the hedge trimmer 1 by an angle of 90º from the position shown in FIG. 6 to the position shown in FIG. 7. In this case, the cutting blades 3 and 4 extend in the vertical direction and the operator grasps or holds the lateral sides of the front handle 10 and the auxiliary handle 30. Therefore, the operator can easily grasp the front handle 10 and the auxiliary handle 30 while standing in an upright posture.

Because the switch lever 31 of the auxiliary handle 30 is downwardly oriented in this state, the operator can grasp or hold the auxiliary handle 30 and operate the switch lever 31 in the same manner as grasping or holding the main handle 20 while operating the switch lever 21 as shown in FIG. 6. Thus, the operator can easily grasp the auxiliary handle 30 and operate the switch lever 31 without being required to twist his/her hand or twist his/her body.

Therefore, even when the operator changes the position of the hedge trimmer 1 from the position shown in FIG. 6 to the position shown in FIG. 7, the operator can hold the hedge trimmer 1 and operate the main switch 70 without changing the position of the grip on the hedge trimmer 1. As a result, the operator can perform a trimming operation in a comfortable posture without being required to rotate the handle, which is a problem of known hedge trimmers.

In order to trim the other lateral side of the hedge G (i.e., the side of hedge G that is opposite to the side of the hedge G shown in FIG. 7), the operator may incline the hedge trimmer 1 by an angle of 90º from the position shown in FIG. 6 in the opposite direction. Therefore, the operator can grasp the opposite lateral side of the front handle 10 and the auxiliary handle 40. In this position, the switch lever 41 of the auxiliary handle 40 is oriented downward. As a result, the operator can grasp the auxiliary handle 40 using the same grip as the main handle 20 in the position shown in FIG. 6.

In order to trim tree branches above the operator or at a position away from the operator, the operator can grasp or hold the main handle 20 and the auxiliary handle 30. In the alternative, the operator can grasp or hold the main handle 20 and the auxiliary handle 40. In such a state, the operator can simultaneously move or push the switch levers 21 and 31 (or 41) to their respective ON positions in order to start the hedge trimmer 1. The same operation may be utilized to trim the upper surface of the hedge G (FIG. 6), the lateral surface of the hedge G (FIG. 7), and the opposite lateral surface of the hedge G (FIG. 8).

In addition, according to the representative hedge trimmer 1, the switch 70 may be turned on only when the actuation shaft 71 has been moved axially by a distance that is sufficient to turn on the switch 70. The actuation shaft 71 may be lifted by the shifting movement from the OFF position to the ON position of any of the switch levers 11, 21, 31, 41 of the respective handles 10, 20, 30, 40. The shifting movement of the switch lever 11 may be converted into the pivotal movement of the actuation arm 13 and then may be further converted into the axial movement of the actuation shaft 71. The shifting movement of the switch lever 21 may be converted into to the axial movement of the actuation shaft 71 by the front portion of the switch lever 21, which front portion moves upward. The shifting movement of the switch levers 31, 41 of the auxiliary handles 30, 40 may be converted into the axial movement of the actuation shaft 71 by means of the actuation shaft 34 and the link arm 35.

Therefore, the ON shifting movement of all the switch levers 11, 21, 31 and 41 may be converted into the movement of the actuation shaft 71 by means of rigid mechanical parts (the actuation arm 13, the switch lever 21 itself or the link arm 35). As a result, the ON operation of the actuation arm 13 may be reliably transmitted to the actuation shaft 71. In addition, by virtue of such rigid mechanical parts, the durability of the switch mechanism may be improved. In contrast, in the switch mechanism taught in DE 4421746 A1, the actuation of a switch lever is transmitted to an operation member that is mechanically connected to a switch by means of a wire. Switch mechanisms that utilize the wire typically have reliability and durability problems, because the wire is flexible and may possibly break after extended use of the power tool.

The above representative embodiments may be modified in various ways. For example, although the auxiliary handles 30, 40 are formed in a loop by connecting the rear ends of the auxiliary handles 30 and 40 to each other, the auxiliary handles 30 and 40 may extend parallel to each other without their rear ends being connected to each other.

In addition, although the actuation shaft 71 moves upward in the axial direction to turn ON the switch 70 in the representative embodiment, the actuation shaft 71 may be replaced by an actuation member that pivots between a first position and a second position, whereby the switch is respectively turned ON and OFF. More specifically, the switch may be turned ON when the pivoted angle of the operation member exceeds a predetermined angle.

## Claims

1. A hedge trimmer (1) comprising:
a body (2) having a motor (50) disposed therein;
a cutting tool (3, 4) extending along a main longitudinal axis of the body and being drivable by the motor;
a main handle (20) extending from an upper, rear portion of the body, wherein a first switch lever (21) is associated with the main handle (20);
at least two auxiliary handles (30, 40) extending rearward from a lower, rear portion of the body and respectively disposed on left and right sides of the body; and
an optional front handle (10);
**characterized by**:
at least two second switch levers (31, 41) associated with the respective auxiliary handles (30, 40), wherein two second switch levers (31, 41) optionally may be connected to each other such that the two second switch levers are movable together;
an optional front switch lever (11) associated with the optional front handle (10); and
wherein respective ends of the auxiliary handles (30, 40) optionally may be connected to each other to form a loop; and
wherein the motor (50) is adapted to start upon actuation of two of:
(1) the optional front switch lever (11),
(2) the first switch lever (21), and
(3) at least one of the second switch levers (31, 41).

2. A hedge trimmer (1) as in claim 1, wherein:
the front handle (10) is disposed near the front portion of the body,
the at least two auxiliary handles (30, 40) are respectively disposed substantially in parallel on the left and right sides of the body, and
the main handle and at least a portion of each of the at least two auxiliary handles are substantially equally spaced in parallel around the longitudinal axis of the body.

3. A hedge trimmer (1) as in claim 1 or 2, wherein the first switch lever (21) and the second switch levers (31, 41) are disposed on inwardly facing surfaces of the respective main handle (20) and the auxiliary handles (30, 40).

4. A hedge trimmer (1) as in any preceding claim, wherein the main handle (20) and the auxiliary handles (30, 40) are arranged and disposed so that an operator can change grips on the various handles in order to make vertically oriented cuts and horizontally oriented cuts without changing the operator's posture.

5. Power shears as in any preceding claim, wherein two second switch levers (31, 41) are connected to each other to form a loop.

6. A hedge trimmer (1) as in any of claims 1-5, further including an actuation member (71) coupled between an electric switch (70) and the front, first and second switch levers (11, 21, 31, 41), the electric switch (70) being electrically connected to the motor (50), wherein the actuation member (71) is arranged such that movement of two of the front, first and second switch levers moves the actuation member so as to actuate the electric switch (70), wherein the electric switch (70) is adapted thereby to actuate the motor.

7. A hedge trimmer (1) as in claim 6, wherein the actuation member (71) comprises a single rod that moves axially in order to turn ON the electric switch (70) when any two of the front, first and second switch levers (11, 21, 31, 41) are actuated.

8. A hedge trimmer (1) as in claim 6 or 7, further including a link arm (35) that can pivot relative to the body (2) to move the actuation member (71), wherein two second switch levers (31, 41) are coupled to the actuation member (71) via the link arm (35).

## Patentansprüche

1. Heckenschere (1) umfassend:
einen Gehäusekörper (2) mit einem hierin angeordneten Motor (50),
ein Schneidwerkzeug (3, 4), das sich entlang einer Hauptlängsachse des Gehäusekörpers erstreckt und durch den Motor antreibbar ist,
einen Haupthandgriff (20), der sich von einem oberen, hinteren Abschnitt des Gehäusekörpers erstreckt, wobei ein erster Schalthebel (21) dem Haupthandgriff (20) zugeordnet ist,
wenigstens zwei Zusatzhandgriffe (30, 40), die sich von einem unteren, hinteren Abschnitt des Gehäusekörpers nach hinten erstrecken und auf der linken bzw. rechten Seite des Gehäusekörpers angeordnet sind, und
einen optionalen vorderen Handgriff (10),
**gekennzeichnet durch**:
wenigstens zwei zweite Schalthebel (31, 41), die den jeweiligen Zusatzhandgriffen (30, 40) zugeordnet sind, wobei zwei zweite Schalthebel (31, 41) optional derart miteinander verbunden sein können, dass die zwei zweiten Schalthebel zusammen bewegbar sind,
einen optionalen vorderen Schalthebel (11), der dem optionalen vorderen Handgriff (10) zugeordnet ist, und
wobei jeweilige Enden der Zusatzhandgriffe (30, 40) optional miteinander verbunden sind, um einen Ring zu bilden, und
wobei der Motor (50) dazu angepasst ist, nach Betätigen von zwei der folgenden Möglichkeiten eingeschaltet zu werden:
(1) der optionale vordere Schalthebel (11),
(2) der erste Schalthebel (21) und
(3) wenigstens einer der zweiten Schalthebel (31, 41).

2. Heckenschere (1) nach Anspruch 1, wobei:
der vordere Handgriff (10) nahe dem vorderen Abschnitt des Gehäusekörpers angeordnet ist,
die wenigstens zwei Zusatzhandgriffe (30, 40) im Wesentlichen parallel auf der linken und rechten Seite des Gehäusekörpers angeordnet sind, und
der Haupthandgriff und wenigstens ein Abschnitt von jedem der wenigstens zwei Zusatzhandgriffe parallel zueinander im Wesentlichen gleichmäßig beabstandet um die Längsachse des Gehäusekörpers angeordnet sind.

3. Heckenschere (1) nach Anspruch 1 oder 2, wobei der erste Schalthebel (21) und die zweiten Schalthebel (31, 41) an einwärts gerichteten Seiten des Haupthandgriffs (20) bzw. der Zusatzhandgriffe (30, 40) angeordnet sind.

4. Heckenschere (1) nach einem der voranstehenden Ansprüche, wobei der Haupthandgriff (20) und die Zusatzhandgriffe (30, 40) so angeordnet und angelegt sind, dass ein Benutzer die Griffe an den verschiedenen Handgriffen wechseln kann, um vertikal ausgerichtete Schnitte und horizontal ausgerichtete Schnitte auszuführen, ohne die Haltung des Benutzers zu verändern.

5. Angetriebene Scheren nach irgendeinem voranstehenden Anspruch, wobei zwei zweite Schalthebel (31, 41) miteinander verbunden sind, um einen Ring zu formen.

6. Heckenschere (1) nach einem der Ansprüche 1-5, ferner enthaltend ein Betätigungselement (71), das zwischen einem elektrischen Schalter (70) und dem vorderen, dem ersten und den zweiten Schalterhebeln (11, 21, 31, 41) eingebunden ist, wobei der elektrische Schalter (70) mit dem Motor (50) elektrisch verbunden ist, wobei das Betätigungselement (71) so angeordnet ist, dass eine Bewegung von zwei Schalthebeln umfassend den vorderen, den ersten und die zweiten Schalthebel das Betätigungselement so bewegt, dass der elektrische Schalter (70) betätigt wird, wobei der elektrische Schalter (70) hierbei dazu angepasst ist, den Motor zu betätigen.

7. Heckenschere (1) nach Anspruch 6, wobei das Betätigungselement (71) eine einzige Stange umfasst, die sich axial bewegt, um den elektrischen Schalter (70) anzuschalten, wenn zwei Schalthebel umfassend den vorderen, den ersten und die zweiten Schalthebel (11, 21, 31, 41) betätigt werden.

8. Heckenschere (1) nach Anspruch 6 oder 7, ferner enthaltend einen Verbindungsarm (35), der relativ zu dem Gehäusekörper (2) schwenken kann, um das Betätigungselement (71) zu bewegen, wobei zwei zweite Schalthebel (31, 41) über den Verbindungsarm (35) mit dem Betätigungselement (71) gekoppelt sind.

## Revendications

1. Taille-haie (1) comprenant :
un corps (2) doté d'un moteur (50) disposé à l'intérieur de celui-ci ;
un outil de coupe (3, 4) s'étendant le long d'un axe longitudinal principal du corps et pouvant être entraîné par le moteur ;
une poignée principale (20) s'étendant à partir d'une partie arrière supérieure du corps, un premier levier d'interrupteur (21) étant associé à la poignée principale (20) ;
au moins deux poignées auxiliaires (30, 40) s'étendant vers l'arrière à partir d'une partie arrière inférieure du corps et respectivement disposées à gauche et à droite du corps ; et
une poignée avant facultative (10) ;
**caractérisé par** :
au moins deux seconds leviers d'interrupteur (31, 41) associés aux poignées auxiliaires (30, 40) respectives, les deux seconds leviers d'interrupteurs (31, 41) pouvant être facultativement raccordés entre eux de sorte que les deux seconds leviers d'interrupteur sont mobiles ensemble ;
un levier d'interrupteur avant facultatif (11) associé à la poignée avant facultative (10) ; et
dans lequel les extrémités respectives des poignées auxiliaires (30, 40) peuvent être facultativement raccordées entre elles pour former une boucle ; et
dans lequel le moteur (50) est adapté pour démarrer suite à l'actionnement de deux parmi :
(1) le levier d'interrupteur avant facultatif (11),
(2) le premier levier d'interrupteur (21), et
(3) au moins l'un des seconds leviers d'interrupteur (31, 41).

2. Taille-haie (1) selon la revendication 1, dans lequel :
la poignée avant (10) est disposée à proximité de la partie avant du corps,
les au moins deux poignées auxiliaires (30, 40) sont respectivement disposées sensiblement parallèlement à gauche et à droite du corps, et
la poignée principale et au moins une partie de chacune des au moins deux poignées auxiliaires sont sensiblement espacées à égale distance parallèlement autour de l'axe longitudinal du corps.

3. Taille-haie (1) selon la revendication 1 ou 2, dans lequel le premier levier d'interrupteur (21) et les seconds leviers d'interrupteur (31, 41) sont disposés sur des surfaces orientées vers l'intérieur de la poignée principale (20) et des poignées auxiliaires (30, 40) respectives.

4. Taille-haie (1) selon l'une quelconque des revendications précédentes, dans lequel la poignée principale (20) et les poignées auxiliaires (30, 40) sont agencées et disposées de sorte qu'un opérateur peut modifier la façon de tenir les différentes poignées afin de réaliser des coupes orientées verticalement et des coupes orientées horizontalement sans changer la position de l'opérateur.

5. Taille-haie selon l'une quelconque des revendications précédentes, dans lequel les deux seconds leviers d'interrupteur (31, 41) sont raccordés entre eux pour former une boucle.

6. Taille-haie (1) selon l'une quelconque des revendications 1 à 5, comprenant en outre un élément d'actionnement (71) couplé entre un interrupteur électrique (70) et les premiers et seconds leviers d'interrupteur avant (11, 21, 31, 41), l'interrupteur électrique (70) étant raccordé électriquement au moteur (50), dans lequel l'élément d'actionnement (71) est agencé de sorte que le mouvement de deux leviers parmi le levier d'interrupteur avant et les premier et seconds leviers d'interrupteur déplace l'élément d'actionnement afin d'actionner l'interrupteur électrique (70), l'interrupteur électrique (70) étant adapté ainsi pour actionner le moteur.

7. Taille-haie (1) selon la revendication 6, dans lequel l'élément d'actionnement (71) comprend une tige unique qui se déplace de manière axiale afin de mettre en marche l'interrupteur électrique (70) lorsque n'importe lequel couple de leviers parmi le levier d'interrupteur avant et les premier et seconds leviers d'interrupteur (11, 21, 31, 41) est actionné.

8. Taille-haie (1) selon la revendication 6 ou 7, comprenant en outre un bras de liaison (35) qui peut pivoter par rapport au corps (2) pour déplacer l'élément d'actionnement (71), dans lequel les deux seconds leviers d'interrupteur (31, 41) sont couplés à l'élément d'actionnement (71) via le bras de liaison (35).
